# EUROPÄISCHE PATENTANMELDUNG

(11) **EP 2 428 389 A2**
(43) Veröffentlichungstag der Anmeldung: **14.03.2012**
(21) Anmeldenummer: 11007060.4
(22) Anmeldetag: 31.08.2011
(51) Int. Cl.: B60L 11/18, B60L 15/20

(54) **Kraftwagen mit elektrischem Antrieb und Batterie sowie Verfahren zum Betreiben einer Einrichtung zum Laden einer Batterie**

(30) Priorität: 10.09.2010 DE 102010045032
(71) Anmelder: Audi Hungaria Motor Kft., 9027 Györ (HU)
(72) Erfinder: Demmelbauer-Ebner, Wolfgang, Dr., 7100 Neusiedl am See (AT)
(74) Vertreter: Lehle, Josef

(57) **Zusammenfassung**

Bei einem Kraftwagen (10) mit elektrischem Antrieb (12) muss die Batterie (14) zum Speisen des elektrischen Antriebs (12) ihrerseits geladen werden, wozu es zum Kraftfahrzeug zugehörig eine Einrichtung (16, 18) zum Laden gibt. Erfindungsgemäß wird diese Einrichtung sowohl bei einer Fahrt des Kraftwagens als auch bei stehendem Kraftwagen nach Bedarf aktiviert und/oder deaktiviert. Der Bedarf wird hierbei anhand einer ermittelten zukünftig befahrenen Fahrstrecke festgelegt.

## Beschreibung

Die Erfindung betrifft ein Verfahren mit einem elektrischen Antrieb und einer Batterie zum Speisen dieses elektrischen Antriebs mit elektrischen Strom. Zum Kraftwagen gehört eine von dem elektrischen Antrieb verschiedene Einrichtung zum Laden der Batterie mit einer Steuereinrichtung, die die Einrichtung zum Laden ansteuert. Die Erfindung betrifft auch ein Verfahren zum Betreiben einer solchen Einrichtung zum Laden einer Batterie in einem Kraftwagen mit elektrischen Antrieb.

Als Einrichtung zum Laden ist insbesondere bevorzugt ein Stromerzeugungsaggregat vorgesehen, das einen Verbrennungsmotor umfasst, welcher einen Generator antreibt. Dies bezeichnet man auch als "Range-Extender". Auf dem Genfer Autosalon wurde vom Hause der Anmelderin eine Studie des Audi A1 E-tron, vorgestellt, bei der als Batterie ein 150 kg schwerer Lithium-lonen Akku im Unterboden vorgesehen ist. Der Verbrennungsmotor ist insbesondere als Wankelmotor ausgebildet. Alternativ kann als Range-Extender auch eine Brennstoffzelle fungieren, die zunächst aus Kraftstoffen wie Benzin Wasserstoff gewinnt und dann den Wasserstoff umsetzt.

Es ist zu vermeiden, dass der Range-Extender erst zu spät in Betrieb gesetzt wird und dann mehr Strom verbraucht werden muss, als gleichzeitig von dem Range-Extender zur Verfügung gestellt wird. Zu einer optimalen Ladestrategie gehört es daher, den Range-Extender rechtzeitig einzuschalten bzw. Hinzuzuschalten, um für eine ausreichende Ladung der elektrischen Batterie zu sorgen.

Von herkömmlichen Batterien her, die im Zusammenhang mit einer Verbrennungskraftmaschine als Antrieb eines Kraftfahrzeugs eingesetzt werden, ist es aus der DE 10 2008 036457 A1 bekannt, diese in Abhängigkeit von Eigenschaften einer voraussichtlichen Fahrtroute und/oder voraussichtlichen Verkehrsbedingungen und/oder voraussichtlichen Umgebungsbedingungen aufzuladen. Der Hintergrund hierbei besteht darin, dass die selbe Verbrennungskraftmaschine, die den Kraftwagen antreibt, während der Fahrt auch einen Teil ihres Drehmoments für den Betrieb eines Generators aufbringen kann. Insbesondere bei Bergabfahrt wird elektrische Energie gewonnen. Daher kommt es auf die voraussichtliche Fahrtroute etc. auch an.

Es ist Aufgabe der vorliegenden Erfindung, bei einem Kraftwagen mit elektrischem Antrieb die zugehörige Batterie (oder allgemein einen Energiespeicher) möglichst optimal mit elektrischem Strom zu laden, ohne dass ein Range-Extender in übermäßigem Maße laufen und Kraftstoff verbrauchen muss.

Die Aufgabe wird durch einen Kraftwagen mit den Merkmalen gemäß Patentanspruch 1 und einem Verfahren mit den Merkmalen gemäß Patentanspruch 4 gelöst.

Bei dem erfindungsgemäßen Kraftwagen ist somit die Steuereinrichtung zum Ansteuern der Einrichtung zum Laden ausgelegt, die Einrichtung zum Laden sowohl während einer Fahrt des Kraftwagens als auch bei stehendem Kraftwagen nach Bedarf zu aktivieren und/oder zu deaktivieren, wobei der Bedarf anhand einer nach zumindest einem vorbestimmten Kriterium ermittelten zukünftig befahrenen Fahrstrecke ermittelt wird. Unter "Aktivieren" und "Deaktivieren" wird vorliegend die Inbetriebnahme zum Zwecke des tatsächlichen Ladens verstanden bzw. die Außerbetriebnahme zum Beenden dieses Ladens.

Die Ladestrategie orientiert sich daher nicht oder nicht ausschließlich anhand von reinen Messgrößen, die sich auf eine aktuelle Situation beziehen, sondern es erfolgt ein vorausschauendes Laden. Dass das Laden auch bei stehendem Kraftwagen bewirkt werden kann, hat den Vorteil, dass bereits bei Fahrtantritt der Ladezustand der Batterie ausreichend ist, um die Fahrt auf der zukünftig befahrenen Fahrstrecke stattfinden zu lassen.

Bei einer bevorzugten Ausführungsform ist die Steuereinrichtung mit einer Navigationseinrichtung des Kraftwagens gekoppelt, um von selbiger Zieldaten und/oder Streckendaten zu empfangen. Zieldaten sind solche Daten, mit denen das Ziel einer Fahrt angegeben wird, oder auch ein Zwischenziel. Stehen solche Daten der Navigationseinrichtung zur Verfügung, dann lässt sich daraus auf die zukünftig befahrene Fahrstrecke schließen. Streckendaten sind insbesondere solche Daten, die während der Fahrt des Kraftwagen gewonnen werden und Auskunft über die gefahrene Strecke geben. Im einfachsten Fall sind die Streckendaten solche Daten, die die Position des Kraftwagens zu bestimmten Zeitpunkten angeben. Das Verwenden von Daten aus der Navigationseinrichtung hat den Vorteil, dass die Bedienperson nicht gesondert Daten für die Planung des Ladevorgangs eingeben muss; die Navigationseinrichtung wird insbesondere in der Regel ohnehin eingesetzt.

Bevorzugt ist die Steuereinrichtung mit einer Einrichtung zum Empfangen von Daten von einer fahrzeugexternen Datenverarbeitungseinrichtung gekoppelt, insbesondere um diese Daten von der Empfangseinrichtung dann zu erhalten und daraus auf die zukünftig befahrene Fahrstrecke zu schließen. Bei einer Alternative werden unmittelbar Daten zur zukünftig befahrenen Fahrstrecke oder wenigstens zum Fahrziel von außerhalb des Kraftfahrzeugs an dieses übermittelt. Es ist aber auch möglich, dass lediglich Daten zu einer Zeitplanung -insbesondere aus einem elektronisch geführten Kalender-an das Kraftfahrzeug übermittelt werden, wobei die Steuereinrichtung dann ergänzende Daten zur Verfügung hat. Beispielsweise kann anhand des Kalenders ersichtlich sein, dass ein Fahrzeugführer morgens zu seiner Arbeitsstätte fahren möchte und abends nach Hause fahren möchte, wohingegen dann in der Navigationseinrichtung des Kraftwagens die Arbeitsstätte als Ziel abgespeichert ist, genauso auch die Heimatadresse.

Bei dem erfindungsgemäßen Verfahren zum Betreiben einer Einrichtung zum Laden einer Batterie in einem Kraftwagen, die einen von der Einrichtung zum Laden verschiedenen elektrischen Antrieb mit elektrischem Strom speist, wird die Einrichtung zum Laden nach einem Bedarf aktiviert und/oder deaktiviert, wobei der Bedarf anhand einer nach einem zumindest einem vorbestimmten Kriterium zukünftig befahrenen Fahrtstrecke des Kraftwagens ermittelt wird.

Im erfindungsgemäßen Verfahren lassen sich die oben zum erfindungsgemäßen Kraftwagen beschriebenen Vorteile anführen.

Bevorzugt wird die Fahrstrecke anhand zumindest einem aktuell oder in der Vergangenheit gültigen Fahrziel ermittelt, das in einer Navigationseinrichtung des Kraftwagens festgelegt wurde. Anhand des Fahrtziels kann auf die zukünftig befahrene Fahrstrecke nämlich besonders einfach geschlossen werden. Wesentlich ist insbesondere die Distanz zwischen den gegenwärtigen Aufenthaltsort des Kraftwagens zum Fahrtziel, die bestimmt, in welchem Ausmaß elektrische Energie aus der Batterie bereitgestellt werden muss. In Abhängigkeit vom gegenwärtigen Ladezustand der Batterie lässt sich dann durch die Steuereinrichtung des Kraftwagens ausrechnen, in welchem Ausmaß die Batterie über die bisherige Ladung hinaus noch von der Einrichtung zum Laden geladen werden muss.

Bevorzugt werden zudem die in einer Datenverarbeitungseinrichtung vorgehaltenen Planungsdaten betreffend die Zeitplanung eines Führers des Kraftwagens bei der Ermittlung des Bedarfs berücksichtigt.

So kann beispielsweise die Einrichtung zum Laden bereits vor Fahrtantritt in Betrieb gesetzt werden, damit bei Fahrtantritt ein ausreichender Ladezustand zur Verfügung steht. Der Zeitpunkt des Fahrtantritts ergibt sich aus der Zeitplanung. Im einfachsten Falle sind in einem elektronisch geführten Kalender Zeitpunkte angegeben und Orte zu diesen Zeitpunkten, an denen sich der Fahrzeugführer dann aufhalten möchte bzw. zu denen er sich ab einem bestimmten Zeitpunkt hinbewegen möchte (Fahrtziele).

Bei einer bevorzugten Ausführungsform ist die Datenverarbeitungseinrichtung gesondert vom Kraftwagen bereitgestellt und die Planungsdaten werden, insbesondere drahtlos, in den Kraftwagen überspielt.

Solche Planungsdaten aus einem elektronisch geführten Kalender stehen nämlich insbesondere in mobilen Einrichtung wie Mobilfunktelefonen und Palmtops zur Verfügung, gegebenenfalls auch in Laptops, die der Fahrzeugführer ohnehin mit sich führt und daher auch zum Kraftwagen und in ihn hinein transportiert. Dann ist ein solches Überspielen ohne Weiteres möglich. Bei dieser bevorzugten Ausführungsform ist es also nicht notwendig, dass solche Planungsdaten in eine Einrichtung des Kraftwagens unmittelbar eingegeben werden; dies wäre alternativ allerdings ebenfalls möglich, insbesondere dann denkbar, wenn das Kraftfahrzeug weitere Funktionen übernimmt, z. B. mit einer Art Personalcomputer ausgestattet ist, dessen Daten umgekehrt zu einer mobilen Dateneinrichtung überspielt werden; denkbar ist auch die Übermittlung der Planungsdaten von einem zentralen Server, an den diese von verschiedenen ortsfesten Datenverarbeitungseinrichtungen regelmäßig überspielt werden -der elektronische Kalender ist dann gar nicht mehr an eine bestimmte Datenverarbeitungseinrichtung gebunden.

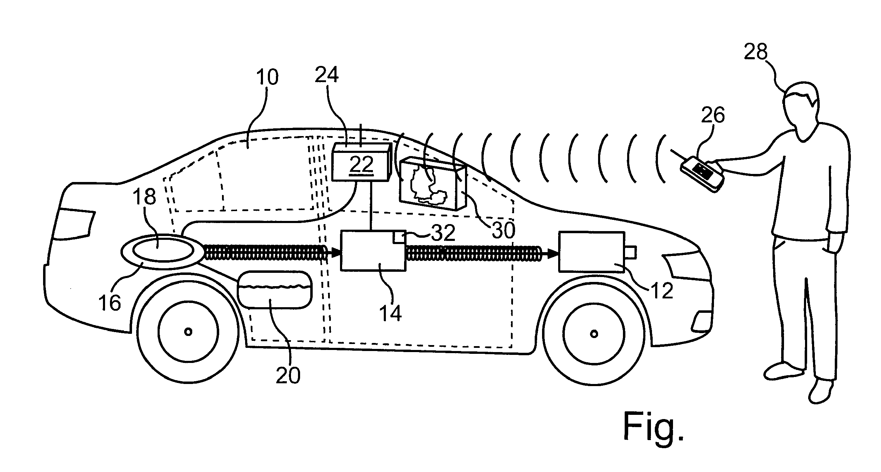

Nachfolgend wird eine bevorzugte Ausführungsform der Erfindung unter Bezug auf die Zeichnung beschrieben, in der die einzige Figur
schematisch einen Kraftwagen veranschaulicht, bei dem das erfindungsgemäße Verfahren durchführbar ist.

Ein im Ganzen mit 10 bezeichneter Kraftwagen weist einen elektrischen Antrieb 12 auf, der von einem Energiespeicher 14, der vorliegend als Lithium-Ionen-Batterie ausgeführt ist, mit elektrischem Strom gespeist wird. Die Batterie 14 kann von außerhalb des Kraftwagens her geladen werden. Dies ist aber nicht stets möglich. Aus diesem Grunde weist das Kraftfahrzeug 10 einen so genannten Range-Extender auf, nämlich einen Wankelmotor 16, dem ein elektrischer Generator 18 zugeordnet ist, welcher im Betrieb des Wankelmotors 16 elektrischen Strom zur Ladung der Batterie 14 erzeugt. Der Wankelmotor 16 wird mit Kraftstoff aus einem Kraftstofftank 20 betrieben. Eine Steuereinrichtung 22 steuert den Wankelmotor 16 mit dem Generator 18. Die Steuereinrichtung 22 ist mit einer Empfangseinrichtung 24 gekoppelt, die von einer mobilen Datenverarbeitungseinrichtung wie z. B. einen Mobilfunktelefon 26 Daten drahtlos empfangen kann. Insbesondere ist vorliegend vorgesehen, dass Daten aus einem elektronisch geführten Kalender überspielt werden, die eine Aussage über einen Zeitpunkt und einen Aufenthaltsort einer Benutzerperson 28 machen, wie sie deren Planung entsprechen.

Aus dem elektronisch geführten Kalender ist beispielsweise ersichtlich, dass sich die Person 28 morgens um 8 h zum Kraftwagen 10 bewegen wird, um zur Arbeit zu fahren. Steht im Kalender beispielsweise "8 h, Fahrt zur Arbeit", so "weiß" die Steuereinrichtung 22, dass damit ein bestimmtes Ziel gemeint ist. Beispielsweise ist im Navigationssystem 30 des Kraftfahrzeugs als Ziel "Arbeit" die Adresse der Arbeitsstätte der Person 28 angegeben. Die Steuereinrichtung 22 kann somit planen, wie die Batterie 14 geladen werden muss. Es kann sein, dass die Batterie nach einem Laden in einer Garage der Person 28 ausreichend geladen ist. Steht nun im elektronischen Kalender "14 h Ort B", so kann die Steuereinrichtung 22 die Fahrt von der Arbeitsstätte zum Ort B planen. Wenn nach der Fahrt zur Arbeitsstätte die Batterie 14 nicht mehr ausreichend geladen ist, als dass eine Fahrt von der Arbeitsstätte zum Ort B ohne zusätzliches Laden der Batterie möglich wäre, dann wird bereits vor Fahrtantritt, der um ca. 13.40 h erfolgen müsste, wie die Steuereinrichtung 22 vom Navigationssystem 30 "weiß", bereits der Wankelmotor 16 angeworfen, im Beispielsfalle also z. B. um 13.25 h. Wenn der Wankelmotor 16 dann genau eine Viertelstunde läuft, ist bei Fahrtantritt die Batterie 14 genauso weit geladen, dass die Fahrt bis zum Fahrtziel B genau oder mit einer ausreichenden Reserve möglich ist.

Ist dem elektronischen Kalender zu entnehmen, dass die Person 28 um 15 h an einen weiteren Ort C sein möchte, kann bereits während der Fahrt nach B der Wankelmotor 16 weiterhin betrieben werden, damit die Ladung der Batterie 14 für die relativ bald folgende Fahrt zum Ort C ebenfalls ausreichend geladen ist.

Dem elektronischen Kalender entnimmt die Steuereinrichtung 22 beispielsweise dann ferner, dass die Person 28 schließlich noch nach Hause fahren möchte. Hier muss nicht unbedingt eine präzise Zeit angegeben sein, aber die Steuereinrichtung 22 wird das Laden der Batterie 14 so planen, dass auf jeden Fall eine ausreichende Ladung der Batterie 14 gewährleistet ist, damit die Fahrt vom Ort C nach Hause ab einem bestimmten Zeitpunkt stattfinden kann. Beispielsweise kann während der Fahrt vom Ort B zum Ort C bereits im Voraus für die Nachhausefahrt eine Ladung der Batterie 14 erfolgen, oder es kann bereits auf Vorrat um ca. 16.30 h der Wankelmotor 16 für eine halbe Stunde angeworfen werden, um die Batterie 14 zu laden, wenn ab frühestens 17 h Uhr mit der Nachhausefahrt gerechnet wird; der Wankelmotor wird dann um 17 h Uhr ausgestellt, unabhängig davon, ob die Person 28 die Fahrt antritt oder nicht.

Die Steuereinrichtung 22 verwendet also sowohl drahtlos von einer externen Datenverarbeitungseinrichtung 26 übermittelte Daten als auch Daten von dem Navigationssystem 30, um zu planen, wie sie den Wankelmotor 16 betreiben muss, um die Batterie 14 zu laden. Der Beladungszustand der Batterie 14 kann der Steuereinrichtung 22 aufgrund der vorherigen Ladevorgänge und Entnahmevorgänge bekannt sein, bevorzugt wird jedoch durch eine Einrichtung 32 zum Messen der Ladezustand der Batterie 14 ermittelt, und entsprechende Daten werden an die Steuereinrichtung 22 übersendet.

## Patentansprüche

1. Kraftwagen (10) mit einem elektrischen Antrieb (12) und einer Batterie (14) zum Speisen des elektrischen Antriebs (12) mit elektrischem Strom, sowie einer zum Kraftwagen (10) zugehörigen, von dem elektrischen Antrieb (12) verschiedenen Einrichtung (16) zum Laden der Batterie (14), und mit einer Steuereinrichtung (22), die zum Ansteuern der Einrichtung (16) zum Laden ausgelegt ist und ausgelegt ist, die Einrichtung (16) zum Laden sowohl während einer Fahrt des Kraftwagens (10), als auch bei stehendem Kraftwagen (10) nach Bedarf zu aktivieren und/oder zu deaktivieren, wobei der Bedarf anhand einer nach zumindest einem vorbestimmten Kriterium ermittelten zukünftig befahrenen Fahrstrecke ermittelt wird.

2. Kraftwagen (10) nach Anspruch 1, bei dem die Steuereinrichtung (22) mit einer Navigationseinrichtung (30) des Kraftwagens (10) gekoppelt ist, um von dieser Daten, insbesondere Zieldaten und/oder Streckendaten, zu empfangen.

3. Kraftwagen (10) nach Anspruch 1 oder 2, bei dem die Steuereinrichtung (22) mit einer Einrichtung (24) zum Empfangen von Daten von einer fahrzeugexternen Datenverarbeitungseinrichtung (26) gekoppelt ist.

4. Verfahren zum Betreiben einer Einrichtung (16, 18) zum Laden einer Batterie (14) in einem Kraftwagen (10), die einen von der Einrichtung (16, 18) zum Laden verschiedenen elektrischen Antrieb (12) mit elektrischem Strom speist, wobei die Einrichtung (16, 18) zum Laden nach einem Bedarf aktiviert und/oder deaktiviert wird, wobei der Bedarf nach zumindest einem vorbestimmten Kriterium anhand einer zukünftig befahrenen Fahrstrecke des Kraftwagens ermittelt wird.

5. Verfahren nach Anspruch 4, bei dem die Fahrstrecke aus zumindest einem aktuell oder in der Vergangenheit gültigen Fahrziel ermittelt wird, das in einer Navigationseinrichtung (30) des Kraftwagens festgelegt wurde.

6. Verfahren nach Anspruch 5, bei dem in einer Datenverarbeitungseinrichtung (26) vorgehaltene Planungsdaten betreffend die Zeitplanung eines Führers (28) des Kraftwagens (10) bei der Ermittlung des Bedarfs berücksichtigt werden.

7. Verfahren nach Anspruch 6, bei dem die Datenverarbeitungseinrichtung (26) gesondert vom Kraftwagen (10) bereitgestellt ist und die Planungsdaten, insbesondere drahtlos, an den Kraftwagen (10) überspielt werden.
